# EUROPÄISCHE PATENTSCHRIFT

(11) **EP 1 950 002 B1**
(45) Veröffentlichungstag und Bekanntmachung des Hinweises auf die Patenterteilung: **17.10.2012**
(21) Anmeldenummer: 07023811.8
(22) Anmeldetag: 08.12.2007
(51) Int. Cl.: B23K 33/00, B60J 5/04

(54) **Hohlträger für ein Kraftfahrzeug**
Hollow section for a motor vehicle
profilé creux pour véhicule automobile

(30) Priorität: 26.01.2007 DE 102007003983
(43) Veröffentlichungstag der Anmeldung: 30.07.2008
(73) Patentinhaber: Bayerische Motoren Werke Aktiengesellschaft, 80809 München (DE)
(72) Erfinder: Hornig, Hans, 83536 Gars (DE)

(56) Entgegenhaltungen:
- EP-A- 0 771 605
- DE-A- 19 538 595
- DE-A1- 10 048 233
- US-A- 4 916 284

## Beschreibung

Die Erfindung bezieht sich auf einen Hohlträger für ein Kraftfahrzeug, bestehend aus einem inneren und einem äußeren, schalenförmigen Blechteil, welche randseitig mit koplanar aufeinanderliegenden Flanschen versehen sind, von denen zumindest einer stirnseitig eine Schmelznahtverbindung mit dem Gegenflansch aufweist, nach dem Oberbegriff des Patentanspruchs 1.

Bei Hohlträgern der aus der US-A-4 916 284, der DE 195 38 595 A1 oder der EP-A -0 71 605 bekannten Art, wie sie etwa als Rahmenprofil von Kraftfahrzeugen Verwendung finden, sind die schalenförmigen Blechteile mit seitlich abstehenden Flanschen versehen, an denen sie lagegerecht zusammengespannt und dann miteinander verschweißt werden. Hohlträger dieser Bauart besitzen jedoch eine vergleichsweise große Flanschbreite und benötigen daher, bezogen auf die erzielbare konstruktive Festigkeit und Steifigkeit, ein unerwünscht großes Einbauvolumen, was insbesondere in Verbindung mit Fensterrahmen von Fahrzeugtüren der Forderung nach einer schlanken Profilgestaltung und einem möglichst großen Sichtbereich des Fahrzeugfensters entgegensteht.

Ferner ist in der DE 100 48 233 A1 ein Fensterprofil der eingangs genannten Art für ein Kraftfahrzeug vorbeschrieben, bei dem die planar aufeinanderliegenden Flansche der schalenförmigen Profilteile mit seitlich verlängerten Flanschabschnitten versehen sind, an denen sie zunächst zusammengespannt und punktverschweißt werden, woraufhin die verlängerten Flanschabschnitte abgetrennt und die verbliebenen Flanschansätze nahe der Flanschinnenseite stirnseitig miteinander verschweißt werden. Dabei können die Flanschansätze während des Verschweißens jedoch nicht mehr miteinander verspannt werden, und problematisch bei dieser Bauart ist ferner der unerwünscht hohe Fertigungsaufwand und Materialverlust.

Aufgabe der Erfindung ist es, einen Hohlträger der eingangs genannten Art zu schaffen, mit dem auf fertigungstechnisch einfache, prozesssichere Weise eine, bezogen auf den benötigten Einbauraum, hohe konstruktive Festigkeit und Steifigkeit zu erzielen ist.

Diese Aufgabe wird erfindungsgemäß durch einen Hohlträger mit den Merkmalen des Patentanspruchs 1 gelöst.

Erfindungsgemäß wird die Breite der Verbindungsflansche auf das zum Ansetzen eines Spannelements und dadurch zur prozesssicheren Herstellung einer Schmelzfügenaht erforderliche Minimum reduziert und das so gewonnene Einbauvolumen für eine Vergrößerung des Hohlraumquerschnitts und damit des Widerstandsmoments des Hohlträgers genutzt. Das Ergebnis ist ein Hohlprofil mit einer, bezogen auf das Einbaumaß, hochgradigen Lastfestigkeit und -steifigkeit, welches an den Verbindungsflanschen auf fertigungstechnisch einfache, materialsparende Weise durch eine im Zusammenwirken mit einer sicheren Einspannung qualitativ hochwertig ausgebildete Schmelzfügenaht verbunden ist.

Eine besonders exakte und fertigungsmäßig einfache Schmelzstrahlführung wird vorzugsweise durch eine taktile Antastung des Schmelzstrahlkopfes erreicht und zu diesem Zweck sind die beiden Verbindungsflansche unterschiedlich breit bemessen, wobei der breitere jedoch lediglich um den zur taktilen Antastung minimal benötigten Überstand über den schmaleren Flansch verlängert ist.

In weiterer vorteilhafter Ausgestaltung der Erfindung sind die Flansche durch eine Kehlnaht miteinander verbunden, und zwar zweckmäßigerweise laserverschweißt, was eine Schmelznahtverbindung hoher Festigkeit bei zugleich geringem Wärmeeintrag ergibt und daher besonders für verzugs- und rissanfällige Materialien geeignet ist, also vor allem für Blechteile, die, wie bevorzugt, aus Gründen einer Leichtbauweise aus Aluminium bestehen. Wie bereits erwähnt, kann der Hohlträger in vielen Anwendungsfällen, wie etwa bei der bevorzugten Verwendung als Fensterrahmenprofil einer Kraftfahrzeugtür, anstatt durch eine Schweiß- auch durch eine Lötverbindung zusammengefügt werden.

Die Erfindung wird nunmehr anhand eines Ausführungsbeispiels in Verbindung mit den Zeichnungen näher erläutert. Es zeigen in stark schematisierter Darstellung:
- **Fig. 1**: die Ansicht einer Kraftfahrzeugtür im Rohbauzustand;
- **Fig. 2a, b**: einen Schnitt längs der Linie A-A der Fig. 1 eines erfindungsgemäß ausgebideten (a) und eines herkömmlichen (b) Fensterrahmenprofils;
- **Fig. 3**: eine vergrößerte Teildarstellung des in Fig. 2a gezeigten Fensterrahmenprofils; und
- **Fig. 4**: eine der Fig. 3 entsprechende Darstellung eines Fensterrahmenprofils mit einer alternativen Schweißnahtverbindung.

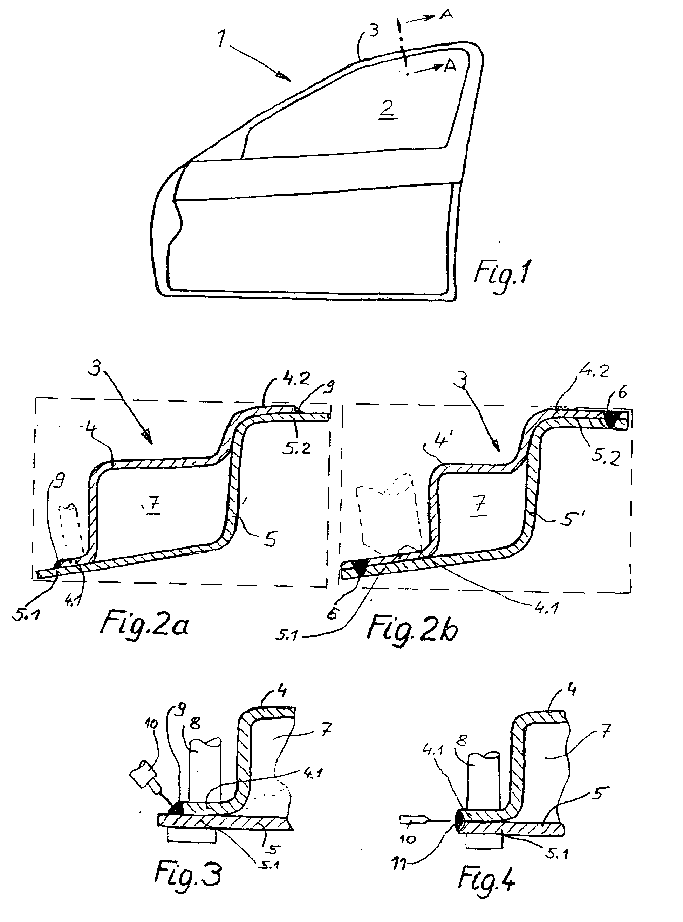

Die in Fig. 1 gezeigte Rohbautür 1 ist aus mehreren, vorgeformten Blechteilen zusammengefügt, die im Bereich des Fensterausschnitts 2 ein - in Fig. 2 näher dargestelltes - Hohlträgerprofil 3 aus einem inneren und einem äußeren, schalenförmigen Blechteil 4, 5 bilden, welche an ihren jeweils beidseitig nach außen abstehenden, planar aufeinanderliegenden Verbindungsflanschen 4.1 und 4.2 bzw. 5.1 und 5.2 lastfest miteinander schmelznahtverbunden, nämlich laser- oder plasmaverschweißt sind, aber auch verlötet sein können.

Wie aus Fig. 2b ersichtlich ist, werden die Verbindungsflansche 4.1, 4.2 und 5.1, 5.2 der Blechteile 4', 5' während des Schmelzfügeprozesses üblicherweise durch ein relativ breites, in Fig. 2b gestrichelt dargestelltes Spannelement zusammengepresst und dann - zumeist mittels einer Überlappnaht 6 - miteinander verschweißt. Dementsprechend groß muss die Flanschbreite bemessen werden, so dass die Querschnittsfläche des von den Blechteilen 4, 5 umschlossenen Hohlraums 7, welche für das Widerstandsmoment und somit für die konstruktive Festigkeit und Steifigkeit des Hohlträgers 3 zur Verfügung steht, auf einen vergleichsweise kleinen Bruchteil des vom Hohlträger 3 insgesamt benötigten, in Fig. 2 gestrichelt umrandeten Einbauraums beschränkt ist.

Erfindungsgemäß hingegen wird die Breite der Verbindungsflansche 4.1 und 4.2 zumindest des einen Blechteils 4 gemäß Fig. 2 a sowie Fig. 3 und 4 auf das zum Ansetzen eines so schmal wie möglich bemessenen Spannelements 8 erforderliche Minimum reduziert und der dadurch gewonnene Freiraum zur Vergrößerung des für das Widerstandsmoment des Hohlträgers 3 maßgeblichen Hohlraumquerschnitts ausgenutzt. Hieraus ergibt sich bei gleich großen (in Fig. 2 a ebenfalls gestrichelt umrandeten) Einbaufenstern eine deutliche Erhöhung der konstruktiven Festigkeit und Steifigkeit des Hohlträgerprofils 3.

Bei dem Ausführungsbeispiel nach den Fig. 2 a und 3 sind die Blechteile 4, 5 durch eine Kehlnaht 9 miteinander laserverschweißt, und aus Gründen einer exakten Laserstrahlführung ist der untere Verbindungsflansch 5.1 (bzw. 5.2) geringfügig, vorzugsweise etwa 4 mm, um einen für eine taktile Antastung des Laserstrahlkopfes 10 erforderlichen Überstand über den korrespondierenden Flansch 4.1 (bzw. 4.2) des anderen Blechteils 4 hinaus verlängert. In der Ausführungsform nach Fig. 4 hingegen sind beide Flansche 4.1 und 5.1 (bzw. 4.2 und 5.2) gleich schmal bemessen und durch eine Stirnfügenaht 11 miteinander laserverschweißt.

Die beschriebene Bauweise ist besonders für Hohlträger geeignet, die in Leichtbauweise aus Aluminium-Blechteilen 4, 5 zusammengefügt sind.

## Patentansprüche

1. Hohlträger für ein Kraftfahrzeug, bestehend aus einem inneren und einem äußeren, schalenförmigen Blechteil (4, 5), die randseitig mit (4.1, 4.2; 5.1, 5.2) versehen sind,
von denen zumindest einer Verbindungs Flanschen (4.1, 4.2) stirnseitig eine Schmelznahtverbindung (9) mit dem Gegenflansch (5.1, 5.2) aufweist, wobei
zumindest der stirnseitig schmelznahtverbunden Verbindungs Flansch (4.1, 4.2) auf eine zum Ansetzen eines Spannelements (8) unmittelbar angrenzend an die dem Hohlraum (7) zugewandte Flanschinnenseite unbedingt erforderliche
Flanschbreite begrenzt ist, **dadurch gekennzeichnet, dass** die Verbindungs Flansche (41,42,51,52) durch gebend koplanar aufeinander ligenden ausgebildet sind.

2. Hohlträger nach Anspruch 1, **dadurch gekennzeichnet, dass**
der Gegenflansch (5.1, 5.2) über die Stirnseite des Verbindungs Flansches (4.1, 4.2) hinaus mit einem Überstand zur taktilen Antastung eines Schmelzstrahlkopfes (10) versehen ist.

3. Hohlträger nach Anspruch 2, **dadurch gekennzeichnet, dass**
die Verbindungs Flansche (4.1, 4.2, 5.1, 5.2) durch eine Kehlnaht (9) miteinander verbunden sind.

4. Hohlträger nach einem der vorhergehenden Ansprüche, **dadurch gekennzeichnet, dass**
die Verbindungs Flansche (4.1, 4.2, 5.1, 5.2) miteinander laserverschweißt sind.

5. Hohlträger nach einem der Ansprüche 1 bis 3, **dadurch gekennzeichnet, dass**
die Verbindungs Flansche (4.1, 4.2, 5.1, 5.2) miteinander verlötet sind.

6. Hohlträger nach einem der vorhergehenden Ansprüche, **dadurch gekennzeichnet, dass**
die Blechteile (4, 5) aus Aluminium bestehen.

7. Hohlträger nach einem der vorhergehenden Ansprüche, **dadurch gekennzeichnet, dass**
die miteinander verbundenen Blechteile (4, 5) Bestandteil einer Fahrzeugtür (1) sind.

8. Hohlträger nach Anspruch 7, **dadurch gekennzeichnet, dass**
die miteinander verbundenen Blechteile (4, 5) den Fensterrahmen einer Fahrzeugtür (1) bilden.

## Claims

1. A hollow bearer for a motor vehicle, comprising an inner and an outer saucer-type metal part (4, 5) with connecting flanges (4.1, 4.2; 5.1, 5.2) at their edges, at least one flange (4.1, 4.2) ending in a seam (9) connected to the mating flange (5.1, 5.2), wherein
at least the flange (4.1, 4.2) connected by a seam is limited to the width absolutely necessary for attaching a clamping element (8) immediately adjacent the inside of the flange facing the cavity (7), **characterised in that**
the connecting flanges (4.1, 4.2; 5.1, 5.2) are coplanar and rest on one another along their entire length.

2. A hollow bearer according to claim 1, **characterised in that**
the mating flange (5.1, 5.2) projects beyond the edge of the flange (4.1, 4.2) for tactile probing with a welding beam head (10).

3. A hollow bearer according to claim 2, **characterised in that**
the flanges (4.1, 4.2; 5.1, 5.2) are connected by a fillet weld (9).

4. A hollow bearer according to any of the preceding claims, **characterised in that**
the flanges (4.1, 4.2; 5.1, 5.2) are welded together by laser.

5. A hollow bearer according to any of claims 1 to 3, **characterised in that**
the flanges (4.1, 4.2; 5.1, 5.2) are connected by soldering or braising.

6. A hollow bearer according to any of the preceding claims, **characterised in that**
the metal parts (4, 5) are aluminium.

7. A hollow bearer according to any of the preceding claims, **characterised in that**
the connected metal parts (4, 5) form a component of a vehicle door (1).

8. A hollow bearer according to claim 7, **characterised in that**
the connected metal parts (4, 5) form the window-frame of a vehicle door (1).

## Revendications

1. Profilé creux pour véhicule automobile composé d'une pièce en tôle (4, 5) en forme de coque, intérieure et extérieure, dont le bord est muni de brides de liaison (4.1, 4.2; 5.1, 5.2) dont au moins l'une (4.1, 4.2) comporte, côté frontal, une liaison par un cordon de fusion (9) avec la bride complémentaire (5.1, 5.2),
- au moins la bride de liaison (4.1, 4.2) reliée, côté frontal, par un cordon de fusion, est limitée à la largeur de bride indispensable pour appliquer un élément de serrage (8) directement adjacent au côté intérieur de la bride tourné vers la cavité (7),
profilé creux **caractérisé en ce que**
les brides de liaison (4.1, 4.2; 5.1, 5.2) sont réalisées de façon à s'appliquer l'une contre l'autre de manière coplanaire, continue.

2. Profilé creux selon la revendication 1,
**caractérisé en ce que**
la bride complémentaire (5.1, 5.2) est munie au-delà de la face frontale de la bride de liaison (4.1, 4.2) d'une partie en dépassement pour le palpage tactile d'une tête à jet de fusion (10).

3. Profilé creux selon la revendication 2,
**caractérisé en ce que**
les brides de liaison (4.1, 4.2; 5.1, 5.2) sont reliées par un cordon en creux (9).

4. Profilé creux selon l'une quelconque des revendications précédentes, **caractérisé en ce que**
les brides de liaison (4.1, 4.2; 5.1, 5.2) sont soudées par laser.

5. Profilé creux selon les revendications 1 à 3,
**caractérisé en ce que**
les brides de liaison (4.1, 4.2; 5.1, 5.2) sont reliées par une brasure.

6. Profilé creux selon l'une quelconque des revendications précédentes,
**caractérisé en ce que**
les pièces en tôle (4, 5) sont en aluminium.

7. Profilé creux selon l'une quelconque des revendications précédentes,
**caractérisé en ce que**
les pièces en tôle (4, 5) reliées les unes aux autres font partie d'une portière de véhicule (1).

8. Profilé creux selon la revendication 7,
**caractérisé en ce que**
les pièces en tôle (4, 5) reliées les unes aux autres constituent le châssis de la fenêtre d'une portière de véhicule (1).
